(19) Europäisches Patentamt / European Patent Office / Office européen des brevets

(11) **EP 2 603 045 B1**

(12) **EUROPEAN PATENT SPECIFICATION**

(45) Date of publication and mention
of the grant of the patent:
**05.03.2014 Bulletin 2014/10**

(51) Int Cl.:
***H04W 48/02*** (2009.01)

(21) Application number: **11192013.8**

(22) Date of filing: **05.12.2011**

(54) **Apparatus and Method in Mobile Telecommunications System User Equipment**

Vorrichtung und Verfahren in mobilem Telekommunikationssystembenutzergerät

Appareil et procédé dans un équipement utilisateur de système de télécommunications mobile

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**12.06.2013 Bulletin 2013/24**

(73) Proprietor: **BlackBerry Limited
Waterloo, ON N2K 0A7 (CA)**

(72) Inventors:
• **Rayavarapu, Venkata Ratnakar Rao
Slough, Berkshire SL1 3XE (GB)**
• **Arora, Dinesh Kumar
Waterloo, Ontario N2L 3W8 (CA)**
• **Canpolat, Onur
Waterloo, Ontario N2L 3W8 (CA)**

(74) Representative: **Brunner, John Michael Owen
Carpmaels & Ransford LLP
One Southampton Row
London WC1B 5HA (GB)**

(56) References cited:
**WO-A1-2010/078588     US-A1- 2010 074 170**

• **"LTE; Evolved Universal Terrestrial Radio
Access (E-UTRA); Radio Resource Control
(RRC); Protocol specification (3GPP TS 36.331
version 10.3.0 Release 10)", TECHNICAL
SPECIFICATION, EUROPEAN
TELECOMMUNICATIONS STANDARDS
INSTITUTE (ETSI), 650, ROUTE DES LUCIOLES ;
F-06921 SOPHIA-ANTIPOLIS ; FRANCE, vol.
3GPP RAN 2, no. V10.3.0, 1 November 2011
(2011-11-01), XP014068381,**

**Description**

BACKGROUND

TECHNICAL FIELD

This application relates to mobile telecommunications systems in general and in particular relates to an apparatus and method in mobile telecommunications system user equipment.

DESCRIPTION OF THE RELATED ART

In a typical wireless cellular radio system, user equipment (UE) communicates via one or more radio access networks (RANs) to one or more core networks. User equipment (UE) comprises various types of equipment such as mobile telephones (also known as cellular or cell phones), lap tops with wireless communication capability, personal digital assistants (PDAs) etc. These may be portable, hand held, pocket sized, installed in a vehicle etc and communicate voice and/or data signals with the radio access network.

In the following, reference may be made to E-UTRA, UMTS and LTE and to particular standards. However it should be understood that the invention is not intended to be limited to any particular mobile telecommunications system.

A radio access network covers a geographical area typically having a plurality of cell areas. Each cell area is served by at least one base station, which in UMTS and LTE may be referred to as a Node B and eNB respectively. The base stations communicate at radio frequencies over an air interface with the UEs within range of the base station. Several base stations may be connected to a radio network controller (RNC) which controls various activities of the base stations. The radio network controllers are typically connected to a core network.

Various standardization bodies are known to publish and set standards for mobile telecommunication systems. For instance, the 3GPP (Third Generation Partnership Project) has been known to publish and set standards for mobile telecommunications. Within the scope of a particular standardization body, specific partners publish and set standards in their respective areas.

Problems may arise when a UE is unable to successfully acquire system information transmitted by the network.

For instance, consider a wireless mobile device, generally referred to as user equipment (UE), that complies with the 3GPP specifications, for instance the UMTS and/or LTE protocols. The 3GPP technical specification 36.331, referred to herein as TS 36.331, addresses the subject of LTE RRC (Radio Resource Control) protocol requirements between the Radio Access Network (E-UTRAN) and the UE.

Section 5.2.2.5 of 3GPP TS 36.331 v.10.3.0 states as follows:

"The UE shall

1> if in RRC_IDLE or in RRC_CONNECTED while T311 is running; and
2> if the UE is unable to acquire the MasterInformationBlock or the SystemInformationBlockType1:

3> consider the cell as barred in accordance with TS 36.304 [4] and;
3> perform barring as if intraFreqReselection is set to 'allowed', and as if the csg-Indication is set to 'FALSE';

2> else if the UE is unable to acquire the SystemInformationBlockType2:

3> treat the cell as barred in accordance with TS 36.304 [4]"

Further section 5.3.1 of 3GPP TS 36.304 v. 10.3.0 states the following:

"When cell status "barred" is indicated or to be treated as if the cell status is "barred",

- The UE is not permitted to select/re-select this cell, not even for emergency calls.
- The UE shall select another cell according to the following rule:

  - If the cell is a CSG cell:

    - the UE may select another cell on the same frequency if the selection/reselection criteria are fulfilled.

  - else

- If the field intraFreqReselection in field cellAccessRelatedinfo in SystemInformationBlockType1 is set to "allowed", the UE may select another cell on the same frequency if re-selection criteria are fulfilled.

- The UE shall exclude the barred cell as a candidate for cell selection/reselection for 300 seconds."

Thus when the UE is unable to acquire system information (in the above case Master Information Block (MIB) or SystemInformationBlockType1 (SIB1) or SystemInformationBlockType2 (SIB2)) the cell is considered to be barred and the UE excludes the barred cell as a candidate for cell selection/reselection for 300 seconds. This may cause problems as described further below. An example description of cell barring is found in WO2010078588A1, which relates to a method and apparatus for cell barring in a wireless communication system.

SUMMARY OF THE INVENTION

The present invention relates to a method according to claim 1, to a device according to claim 13 and to a computer-readable medium according to claim 14.
There are thus proposed strategies for apparatus and method in mobile telecommunications system user equipment. A number of such strategies are detailed below.
Other aspects and features of the proposed strategy will become apparent to those ordinarily skilled in the art upon review of the following description of specific embodiments of an apparatus and method in mobile telecommunications system user equipment.

BRIEF DESCRIPTION OF THE DRAWINGS

Embodiments will now be described, by way of example only, with reference to the attached drawings, in which:

Figure 1 illustrates a first technique in mobile telecommunications system user equipment;
Figure 2 illustrates a second technique in mobile telecommunications system user equipment;
Figure 3 illustrates a third technique in mobile telecommunications system user equipment;
Figure 4 illustrates a fourth technique in mobile telecommunications system user equipment;
Figure 5 illustrates a fifth technique in mobile telecommunications system user equipment;
Figure 6 shows an overview of a network and a user equipment device;
Figure 7 is a block diagram illustrating an embodiment of a protocol stack apparatus provided with a RRC block, in accordance with the present application;
Figure 8 is a block diagram illustrating a mobile device, which can act as a UE and co-operate with the apparatus and methods of Figures 1 to 7.

The same reference numerals are used in different figures to denote similar elements.

DETAILED DESCRIPTION OF THE DRAWINGS

An apparatus and method in mobile telecommunications system user equipment is described. In the following description, for the purposes of explanation, numerous specific details are set forth in order to provide a thorough understanding of the present invention. It will be apparent, however, to one skilled in the art that the technique may be practised without these specific details. In other instances, well-known structures and devices are shown in block diagram form in order to avoid unnecessarily obscuring the present invention.
The needs identified in the foregoing Background, and other needs and objects that will become apparent from the following description, are achieved by, in one aspect, a method in mobile telecommunications system user equipment. In other aspects, the invention encompasses apparatus and a computer-readable medium configured to carry out the foregoing actions, as well as a data carrier carrying thereon or therein data indicative of instructions executable by processing means to cause those means to carry out the foregoing actions. Examples are CD-ROMs, memory sticks, dongles, transmitted signals, downloaded files etc. In particular, the method may be implemented in a mobile telecommunications device, with or without voice capabilities, or other electronic devices such as handheld or portable devices.
The technique relates to a method in wireless telecommunication system user equipment and in particular the operations that are undertaken when a message is unable to be read (for instance it is not received or includes errors). The technique involves reviewing another factor (a signal quality metric, which may include a factor relating to the probability of the identified cell being within range of the UE) before deciding upon the action to take in relation to the cell from which the signal is received (e.g. to bar a cell from a cell selection/re-selection procedure). A method in a user equipment is provided, the method comprising, at the user equipment: receiving data from a cell in a wireless network;

if reading of the data is unsuccessful, determining a signal quality metric for a signal received from the cell; and when reading of the data is unsuccessful and when the signal quality metric meets a criterion, initiating a procedure associated with cells for which reading of the data is unsuccessful. Similarly there is provided a wireless telecommunications device comprising a processor and a memory having stored therein one or more routines executable by the processor, the one or more routines being adapted to: receive data from a cell in a wireless network; if reading of the data is unsuccessful, determine a signal quality metric for a signal received from the cell; and when reading of the data is unsuccessful and when the signal quality metric meets a criterion, initiate a procedure associated with cells for which reading of the data is unsuccessful.

Reference will be made in this disclosure to the term "signal quality metric". This may be used interchangeably with the term "channel quality metric". The signal quality metric is a measure determined by the UE from a signal and it encompasses the characteristics of the received signal and/or the characteristics of the channel when the signal was received.

The procedure associated with cells for which reading of the one or more message is unsuccessful may comprise considering the cell as a barred cell and may comprise barring the cell as a candidate for network access (e.g. barring the cell as a candidate for cell selection, cell reselection, cell handover or cell reestablishment. The cell may be considered as a barred cell for a time period. The time period may be defined as a function of the signal quality metric, may be a predetermined time period or may be a non-predetermined time period.

When reading of the one or more message is unsuccessful and when the signal quality metric of the signal received from the designated cell is below the criterion, the UE may carry out an operation selected from the following: ignore the signal from the designated cell; initiate a procedure associated with cells for which reading of the one or more message is successful.

Reading of the data may comprise attempting to acquire system information, such as a Master information Block and/or a System Information Block.

The signal quality metric may be determined after a plurality of unsuccessful attempts to read data from the cell.

According to a first embodiment, the user equipment (UE) receives a signal from a cell, a signal including data. The UE then attempts to read data in the received signal and monitors for errors during the attempted reading of the data. These errors may be that the UE is unable to decode particular system information from part of the data or the data in its entirety for instance. When the UE is unsuccessful at reading the data, an error is detected and the UE evaluates the quality of error detection by computing a quality metric from quality indicators of the received channel or signal (such as but not limited to Signal-to-Noise Ratio (SNR) of the received channel, Signal-to-Interference Ratio (SIR), Block Error Rate (BER), Reference Signal Received Power (RSRP), Reference Signal Received Quality (RSRQ), carrier-to-interference-plus-noise ratios (C/I+N), any quality indicators from demodulation, channel decoder blocks, modulation scheme, sequence properties, interference level, channel coding properties etc.) to determine a channel quality metric. The channel quality metric can be determined by generating a weighted function of one or more of the channel quality indicators, where each of the channel quality indicators is assigned a different weight to determine the channel metric function. For instance the quality metric may be determined as follows:

$$QM = W1 \cdot QI1 + W2 \cdot QI2 + \ldots\ldots + Wn \cdot Qin$$

Where

QM = quality metric;
W1, W2...Wn denote weights;
QI1, QI2...QIn denote the quality indicators considered in the metric computation (for example: RSRP, BLER etc).

The selection of the channel quality indicators may be based upon possible output data available from the DSP in terms of channel quality in processing the received signal. When the signal quality metric of the signal received from the designated cell meets a satisfactory criterion, the UE initiates a procedure with respect to the designated cell associated with network cells for which messages have been unsuccessfully decoded (e.g. the UE considers the designated cell as a barred cell and the designated cell is not considered as a candidate for network access e.g. the designated cell is not considered as a candidate for at least one of cell re-selection, cell selection, cell handover or cell reestablishment). When the signal quality metric of the signal received from the cell does not meet a satisfactory criterion, the UE does not initiates a procedure with respect to the cell associated with network cells for which data have been unsuccessfully read. Instead the UE takes other action. For instance, the UE may not bar the cell or may operate as if the designated cell had not been detected by the UE (e.g. the UE ignores the signal from the designated cell) or the UE may initiate a procedure with respect to the designated cell associated with network cells for which messages have been successfully decoded (e.g. the designated cell may be considered as a candidate for network access e.g. for at least one of cell re-selection, cell selection, cell handover or cell reestablishment).

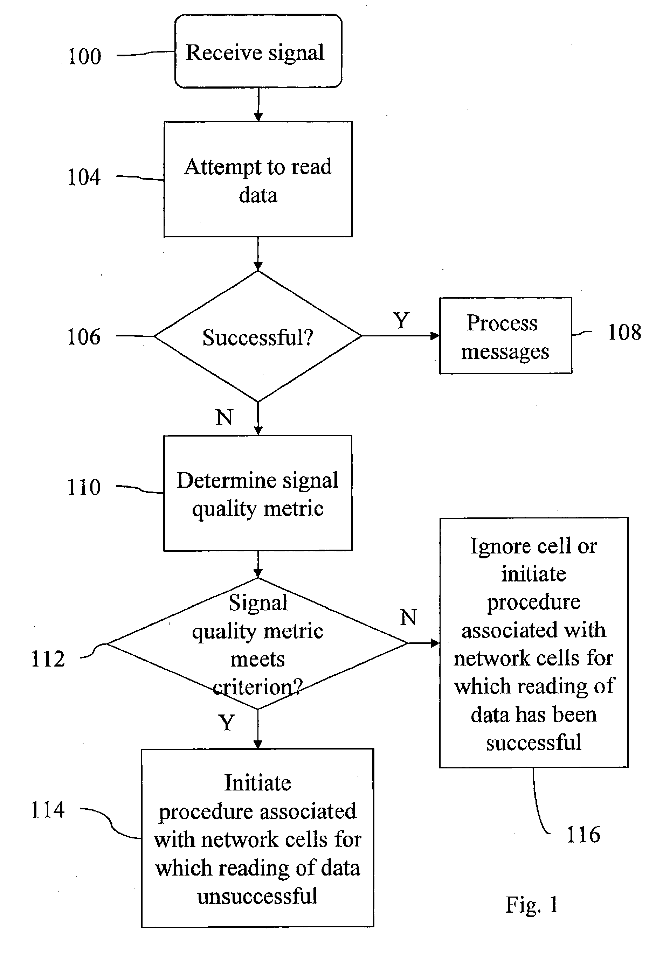

This process is illustrated in Figure 1. First the UE receives a signal from a cell (operation 100), which will be referred to as a designated cell. The UE attempts to read data within this received signal (operation 104). If the reading of data is successful (operation 106) the UE processes the data (operation 108) and the process, as far as the present disclosure is concerned, ends. Should the attempt to read the data be unsuccessful (operation 106 answered in the negative) the UE then determines a signal quality metric of the signal received from the designated cell (operation 110). The UE evaluates whether the signal quality metric meets a criterion e.g. whether the signal quality metric indicates that the quality of the received signal is satisfactory (operation 112). Should the signal quality metric be deemed to meet the criterion (e.g. considered satisfactory) (operation 112 answered in the affirmative), the UE then initiates, with respect to the designated cell, a procedure (operation 114) associated with cells for which messages have been unsuccessfully decoded (e.g. the UE marks the designated cell as a barred cell and the cell is then not considered as a candidate for network access e.g. for cell selection or re-selection or handover or reestablishment). This may comprise the cell being removed from a Neighbour Cell List or flagged in a Neighbour Cell List as being barred. However should the signal quality metric be below the criterion (e.g. deemed unsatisfactory) (operation 112 answered in the negative) then the UE does not initiate a procedure with respect to the designated cell associated with network cells for which messages have been unsuccessfully decoded (e.g. the UE does not consider the cell as a barred cell). Instead the UE takes other action, for instance the UE initiates, with respect to the designated cell, a procedure (operation 116) associated with network cells for which messages have been successfully decoded (e.g. the designated cell is not considered barred and may be considered as a candidate for network access (e.g. cell selection/re-selection)). Alternatively, at operation 116, the UE may ignore the signal from the designated cell as if it had not been received by the UE.

Thus when a signal received from a cell by a UE is unable to be read by the UE but is of a satisfactory signal quality, the cell is treated as if the data have not been successfully read; and when a signal received from a cell by a UE is unable to be read by the UE and the UE determines that the signal quality metric is not satisfactory (e.g. the signal may have deteriorated in some manner), the cell is treated otherwise (e.g the cell is treated as it had not been seen by the UE or as if the messages have been successfully decoded).

In E-UTRAN, a cell can have variable bandwidth ranging from 1.4MHz to 20 MHz. Reference signals meant for the UE to measure the cell power and maintain the synchronization with the cell are transmitted by each cell in resource elements distributed across the entire cell bandwidth. Each cell transmits primary synchronization channels and secondary synchronization channels in the subcarriers around the centre frequency so that UEs can identify the cell without knowing the real bandwidth of the cell. eNB transmits an RRC message called 'Master Information Block' (MIB) on the BCH transport channel mapped onto the PBCH physical channel which again gets transmitted in the subcarriers surrounding the centre-frequency. This MIB carries the bandwidth of the cell, the system frame number of the cell and other information required to locate the resource elements carrying the reference signals. MIB acquisition also helps with the verification of an LTE cell presence as the probability of false detection based on Primary Synchronization Signals (PSS) and Secondary Synchronization Signals (SSS) is not negligible. Thus, the MIB consists of parameters needed by the UE to continue with the cell selection. eNB also transmits an RRC message called 'System Information Block Type 1' (SIB1) which carries the information related to the cell barring/reservation restrictions, PLMN (s), cell identity and tracking area of the cell and other information required to check the suitability of the cell. SIB1 also carries the scheduling information for all the other system information blocks broadcast by the eNB on a Downlink Shared Channel. Therefore, the UE also needs to acquire SIB1 soon after the cell identification to be able to decide whether to camp on the cell or not.

There are other system information blocks which carry various other essential information elements for purposes such as paging reception, random access procedure, measurements etc. As an example, SIB2 carries the configuration of paging occasions and the parameters required for the RACH procedure. A UE acquires the system information for various reasons such as cell selection, reselection, handover, connection release, system information change notification and validity timer expiry.

If we now consider a UE operating according to the first embodiment, if the Layer 1 of a UE is continuously able to detect a cell (by means of the PSS/SSS) and is able to report a satisfactory signal quality metric over the minimum bandwidth of the cell whilst it fails to acquire MIB/SIB1/S1B2 of the cell after 'N' retries, the RRC may bar that cell for a maximum duration (e.g. 300 seconds). If the UE was able to read some but not all of the data (e.g. the UE was able to acquire the MIB but not the other SIBs) then a signal quality metric is determined over a full bandwidth of the cell (e.g. the RSRP of the signal over the actual bandwidth of the cell). The signal quality metric may be evaluated over a minimum bandwidth of the cell. When the reading of the data results in some but not all of the data being read, the signal quality metric may be determined over a full bandwidth of the cell.

As an example, consider a case where Layer 1 of the UE computes one or more signal quality metrics indicating the channel conditions during the MIB/SIB1/SIB2 acquisition attempts and the reliability of the cell detection. The metric can be based on some or all of the factors discussed above like the characteristics of the PSS/SSS signals (modulation scheme, sequence properties), interference level, channel coding properties, SNR, SIR, RSRP, RSRQ and block error rate. Layer 1 provides feedback to the RRC based on the computed metrics. For the case where the UE was able to acquire MIB and not SIB1 or vice-versa, RRC and L1 may also consider this in the metric computation.

With the given feedback, RRC does not bar a cell that resulted in MIB/SIB failure due to poor channel conditions. However the RRC bars the cell if the signal quality metric(s) indicate the reliable presence of a cell with good channel conditions, yet resulting in MIB/SIB1/SIB2 acquisition failure.

As an example implementation, Section 5.2.2.5 of 3GPP TS 36.331 v.10.3.0 may be amended with notes at the end of the section as follows:

Note 1: This section is not applicable for cells with weak coverage conditions, poor channel conditions, and unreliable signalling conditions
And/or
Note 2: This section is applicable only if the UE is reliably sure of the concerned cell coverage

Thus, a UE attempts to read a message. Conditional on the UE being unable to read one or more messages and the signal quality metric being satisfactory, the UE may bar the cell. Barring of the cell is applicable for cells with satisfactory coverage conditions, channel conditions, and/or signalling conditions.

In a further implementation, which may be used as an alternative to the implementation described above or in combination with the implementation described above, the signal quality metric is based on a confidence factor relating to the probability of the cell being within range of the user equipment e.g. the UE evaluates a confidence factor relating to the presence of the cell. In brief, the UE determines whether a signal from the designated cell is likely to be received by the UE (for instance the probability of the designated cell being within radio range of the UE) and uses this confidence factor to determine whether to bar a cell.

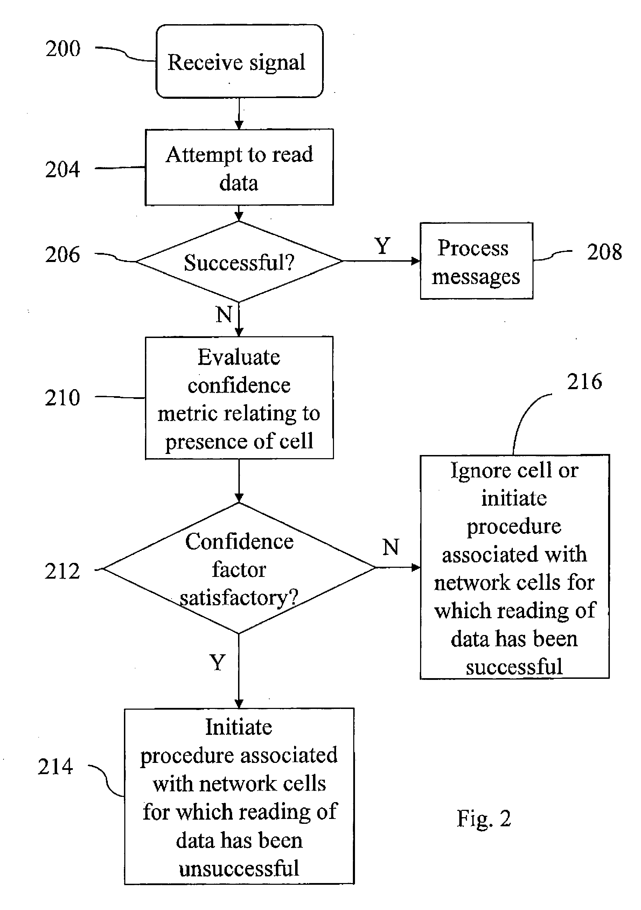

This is illustrated in Figure 2. A signal is received from a designated cell (operation 200). The UE attempts to read data in the signal (operation 204). If the UE is successful in reading the data (operation 206 answered in the affirmative) then the UE processes the data (operation 208) and the process ends as far as the current disclosure is concerned. However if the attempt to read the data is unsuccessful (operation 206 answered in the negative) the UE then evaluates a confidence factor relating to the presence of the designated cell (operation 210).

For instance the UE may consider the finger printed location of the cell with respect to its neighbour cells, or positioning information of the designated cell and the previous known (if any) position_of the cell in question to compute a confidence factor relating to the likelihood of the presence of a cell being within range of the UE.

The finger printed location of a cell relates to a set of markers for that cell that are stored by the UE. Examples of a finger printed location for a cell include a set of parameters related to that cell such as a cell identity, a radio frequency number, or a PLMN identity. Another example is a set of radio characteristics associated with the cell. The finger printed location may also comprise a set of positioning coordinates associated with the cell. Typically, a UE will store one or more of these markers as the finger printed location of a cell.

Information related to the UE at a given time, such as a current position, can then be compared to the finger printed location of the cell; and/or positioning information (typically current) of the UE can be compared with the cell's previously known position, as a cross check(expectation) of the presence of the cell in question. For example, if the UE's current position coordinates match stored position coordinates as part of the cell's finger printed location, then the UE knows the cell can be expected in the location of the UE. Similarly, when the UE encounters a new cell, the finger printed location markers can be checked to determine whether the cell is a desired one or not.

One example of finger printed location markers is known neighbor cells. The finger printed location of the cells may include information that a cell 'A' had cells X, Y, Z as neighbors. If later the UE's current location is such that it has just been moving out of X or Y or Z, then the finger printed location markers would suggest that the probability of finding cell A are high.

The positioning information can be network based (such as time of arrival techniques, or Cell ID approaches) and/or UE based (such as Enhanced Observational Time Difference), or include location coordinates of the cell derived in other manners such as GPS , or assisted GPS which is the non-satellite based positioning supported by cellular networks.

The previous position of the cell in question may be determined from the finger printed location markers.

If the confidence factor evaluated by the UE indicates the likelihood of false detection of the designated cell (operation 212 answered in the negative), the UE does not initiates a procedure with respect to the designated cell associated with network cells for which messages have been unsuccessfully decoded. Instead the UE takes other action, for instance the UE initiates a procedure (operation 216) with respect to the designated cell associated with network cells for which messages have been successfully decoded (e.g. the designated cell is not barred despite the UE being unsuccessful at decoding the message from the designated cell). However if the confidence factor indicates that the cell is likely to be within range of the UE (operation 212 answered in the affirmative), then the UE initiates a procedure (operation 214) with respect to the designated cell associated with network cells for which messages have been unsuccessfully decoded (e.g. the UE marks the designated cell as a barred cell). The cell may be barred for a fixed duration (e.g. 300 seconds) or, for instance, for a duration proportional to the confidence factor.

For example, Layer 1 and/or RRC consider factors like the finger printed location of the cell vis-à-vis its neighbor cells, positioning information of the current and previously known (if any) location of the cell in question to compute a confidence factor regarding the real presence of a cell.

If the confidence factor indicates the possibility of false detection of the cell, the RRC does not bar such cells in spite of MIB/SIB1 acquisition failure.[0043] According to a further embodiment, using the methods of the first and second embodiment, the RRC computes a signal quality metric pertaining to the presence of a cell with channel conditions. The confidence factor is a function of the signal quality metric.

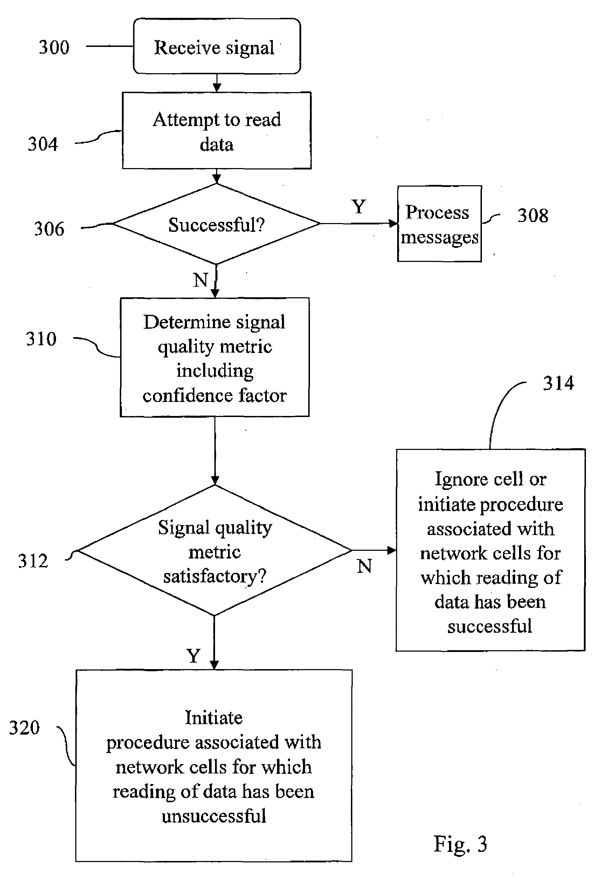

Figure 3 illustrates a UE programmed to operate using these techniques in combination. Firstly the UE receives a signal from a cell (operation 300). The UE attempts to read data within this received signal (operation 303). If the UE is successful in reading the data (operation 306 answered in the affirmative), the data are processed (operation 308) and the process as far as the present disclosure is concerned ends. If the UE is unsuccessful in reading the data (operation 306 answered in the negative), the UE determines a signal quality metric (operation 310), which signal quality metric is a function of a quality indicator, for instance as described in relation to Figure 1, and a confidence factor, for instance as described in relation to Figure 2. If the signal quality metric does not meet a criterion (e.g. the quality is not considered satisfactory) (operation 312 answered in the negative) the UE does not initiates a procedure with respect to the designated cell associated with network cells for which data have been unsuccessfully decoded. Instead the UE takes other action (operation 320), for instance the UE initiates a procedure (operation 314) with respect to the designated cell associated with network cells for which messages have been successfully decoded (e.g. the cell may be considered as a candidate for cell selection/re-selection) or acts as if the designated cell was not seen by the UE. However if the signal quality metric meets the criterion (i.e. the quality is deemed satisfactory) (operation 312 answered in the affirmative) the UE then initiates a procedure (operation 320) with respect to the designated cell associated with network cells for which messages have been unsuccessfully decoded (e.g. the UE may consider the cell barred for cell selection/re-selection).

For example, if a UE is unable to acquire the MIB and/or SIB1 of a cell (operation 306 answered in the negative) and the signal quality metric is deemed satisfactory (operation 312 answered in the affirmative), the RRC may then bar the cell for a duration that is proportional to the confidence factor. For example, for cells that are sure to be present (say confidence factor > 80-90%), the RRC may bar the cell for a maximum duration (e.g. 300 seconds). However the RRC may bar the cells for which the confidence factor is average (say between 25% and 80%) only for a lesser duration (say 60 seconds), giving the cell the benefit of the doubt. Cells with a very low confidence factor (< 25%) need not be barred at all. This model can be expanded to have a multi-level confidence factor and barring duration table. The barring duration may be defined as a function of the confidence factor such as:

$$T\_bar\_duration = Norm\_CF\ (1...0)*Max\_Duration$$

where

  T_bar_duration = barring duration
  Norm_CF = Normalized confidence level range between 1-to-0
  Max_duration = Maximum barring duration (e.g. 300s)

Similarly this model can be expanded to have a multi-level signal quality metric and barring duration table. The barring duration may be defined as a function of the signal quality metric, for example:

$$T\_bar\_duration = Norm\_QM\ (1...0)*Max\_Duration$$

where

  T_bar_duration = barring duration
  Norm_QM = Normalized signal quality metric range between 1-to-0
  Max_duration = Maximum barring duration (e.g. 300s).

According to a further implementation, which may be used alone or in combination with the implementation methods described previously, the UE may maintain a database of cells which have been barred or for which data reading or system information acquisition has been unsuccessful. The UE may maintain a count of the number of times reading of the data is unsuccessful in a signal from the cell, and when the count meets a predetermined criterion initiate for the cell a procedure associated with cells for which reading of the data is unsuccessful. Additionally or alternatively, the UE may maintain a count of the number of times a procedure associated with cells for which reading of the data is unsuccessful (e.g. barring of the cell) is initiated for the cell, and when the count meets a predetermined criterion initiate for the cell a procedure associated with cells for which reading of the data is unsuccessful. For each such cell, a counter may be incremented whenever the cell is marked as barred. After the expiry of a maximum barring duration, the cell would become eligible for procedures associated with network cells for which messages have been successfully decoded (e.g. cell selection/reselection) however the counter value is held. The maintained counter is incremented whenever the cell again gets barred subsequently. If the counter for any such cell exceeds a threshold N over a period of time K (K being longer than the maximum barring duration e.g. K=m7max_duration where m is an integer greater than 1), then the UE may maintain the cell as ineligible for procedures associated with network cells for which messages have been successfully decoded for the maximum barring duration. For a more modest value of the counter, between M and N, the UE bars the cell for a lesser duration (say 60 seconds).

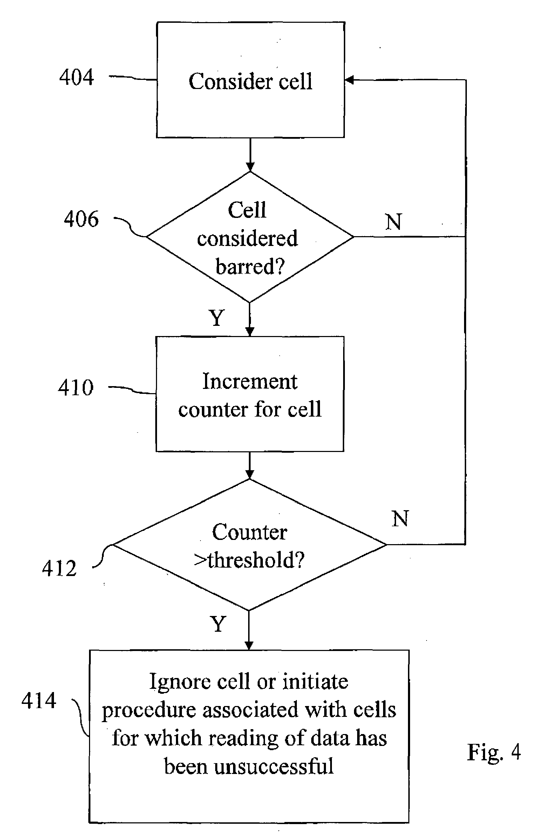

This is illustrated in Figure 4. Each time the UE considers a signal from a cell (operation 404) and considers a cell as being barred (operation 406), the UE increments a counter for that cell (operation 410). When the counter for the cell exceeds a threshold within a given time period (operation 412 answered in the affirmative), the UE initiates, with respect to the designated cell, a procedure (operation 414) associated with network cells for which messages have been unsuccessfully decoded (e.g. the UE bars the cell for a period of time).

The counter associated with a cell can be reset when a successful cell selection occurs for the cell or if no change to the counter value for the cell is detected over a period of time.

For example, the RRC maintains a data base of cells for which system information (e.g. MIB, SIB1) acquisition has failed. For each such cell, a counter is incremented whenever system information acquisition fails on that cell. If the counter for any cell exceeds N, then RRC may bar the cell for a maximum duration. For a more modest value of the counter, between M and N, the RRC may bar the cell for a lesser duration (say 60 seconds). A cell having a counter value less than M is not barred. This model can be expanded to have a multi-level failure counter and barring duration table.

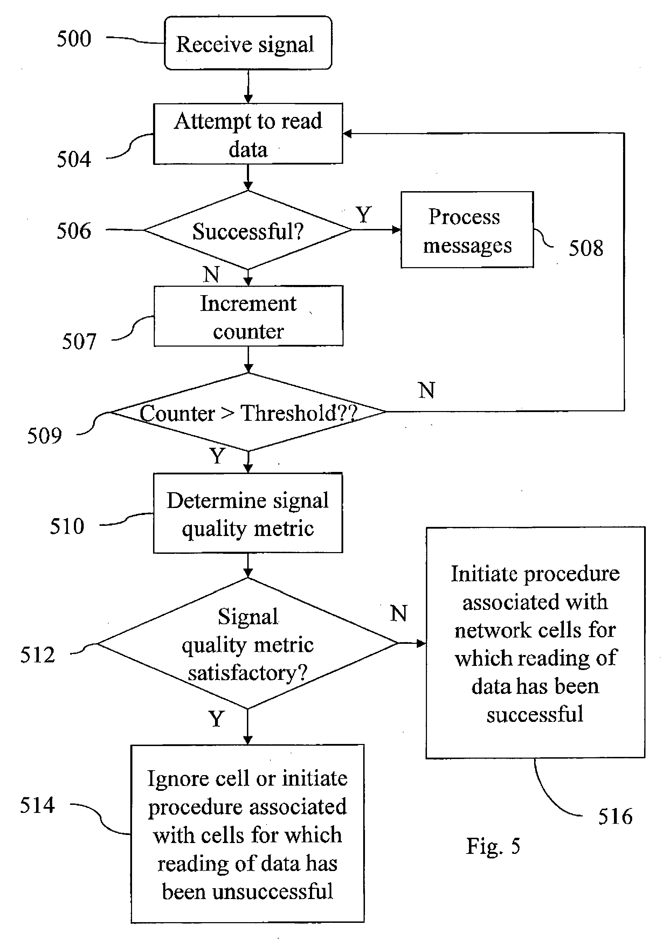

Rather than determining the signal quality metric the first time an attempt to read data from a cell is unsuccessful, the signal quality metric of the signal received from the designated cell may be determined after a plurality of errors are detected or when acquisition of system information is unsuccessful after a plurality of attempts. This is illustrated in Figure 5. A signal is received from a cell and an attempt made to read messages in the signal (e.g. to acquire system information needed for subsequent decoding of messages from the cell). If the reading is successful (operation 506 answered in the affirmative), the messages are processed (operation 508) and the process ends as far as the present disclosure is concerned. If the reading is unsuccessful (operation 506 answered in the negative), a counter is incremented (operation 507) and the counter value considered (operation 509). If the value of the counter is below a threshold (operation 509 answered in the negative) then the UE continues to attempt to read messages in the signal from the cell (operation 504). However if the value of the counter is above a threshold (operation 509 answered in the affirmative), then the UE proceeds to determine a signal quality metric for the signal received from the cell as described previously. If the signal quality metric for the signal received from the cell is satisfactory, then the UE proceeds to handle the cell as if messages have not been successfully read (operation 514). If the signal quality metric for the signal received from the cell is not satisfactory then the UE proceeds to handle the cell as if messages have been successfully read (operation 516).

Parameters used in the solutions described above may be broadcast by the network as a part of system information which can be treated as valid within a cell or within a group of cells or within a PLMN(s). The user equipment device would therefore receive information defining parameters to be used to determine the signal quality metric (for instance which quality indicators are to be used when determining the signal quality metric and/or which parameters are to be used for determining the confidence factor). Alternatively default values can be specified, for instance in technical standards.

The purpose of barring a cell under the circumstances described above is to avoid UEs from attempting to camp on or re-select to such cells that do not broadcast system information (e.g. MIB and/or SIB1/SIB2) properly either erroneously or due to a transient state or maintenance or by purpose (e.g. in the future there is a plan for cells that will not transmit system information at all). Barring such cells would save computational power in the UE by preventing possibly futile selection and reselection attempts to that cell. It is also possible that the network broadcasts the system information blocks but the UE, due to poor channel conditions, fails to decode these blocks. In the latter case, barring the cell may not serve the original intention and may result in the UE going out of service while the cell is barred.

The techniques described address this issue. Cells may be detected based on PSS/SS. However system information acquisition failure for cells detected based on PSS and SSS can happen due to poor reception quality, fluctuating radio conditions, etc. This can happen especially when a UE is hovering around cell boundaries or when the terrain is such that the cell is genuine but system information acquisition might fail. If such a cell is barred, then if the UE actually moves into the cell and/or enters an area of uninterrupted cell coverage, it might have to camp on one of the non-best cells available which can result in excessive power consumption in the UE. At worst, if no other cell coverage is available at the heart of the barred cell, UE may momentarily go out of service before it realizes that there is no other cell to camp and lifts the barring restrictions on the available cell.

Furthermore, false detection of a cell by the UE is possible as PSS and SSS are not channel encoded and are not protected by any CRC type of validity markers. In such case, a UE might assume that it has detected a cell whilst in reality the cell is not available to the UE. The UE will not receive system information from a non-existent cell and so might otherwise consider such as cell as barred. If a UE bars such a cell for and the UE happens to enter into the coverage of the corresponding real cell, then UE will again have to camp on a non-best cell or may momentarily go out of service.

Reference has been made to barring a cell when a UE is unsuccessful at reading a message or acquiring system information. However other action may be taken in relation to the cell from which the signal is received and this disclosure is not intended to be limited to barring a cell from consideration by the UE. Different technical specifications may define different procedures to be initiated should a UE be unsuccessful reading a message or acquiring system information and these other procedures are also intended to be applicable to the methods described. The techniques described provide an additional check to be carried out when a UE is unsuccessful reading a message or acquiring system information. When a UE is unsuccessful reading a message or acquiring system information, rather than deciding to bar the cell the UE undertakes a further check before barring the cell. The UE undertakes the check of determining a signal quality metric, which indicates the quality of the signal received from the cell. Only conditional upon the signal quality metric indicating that the received signal is of a satisfactory quality is a procedure followed that is associated with cells for which reading of the data is unsuccessful (e.g. the cell is barred from consideration for network access). If the signal quality metric indicates that the received signal is not of a satisfactory quality, the cell is not barred and so may be considered as a candidate for network access.

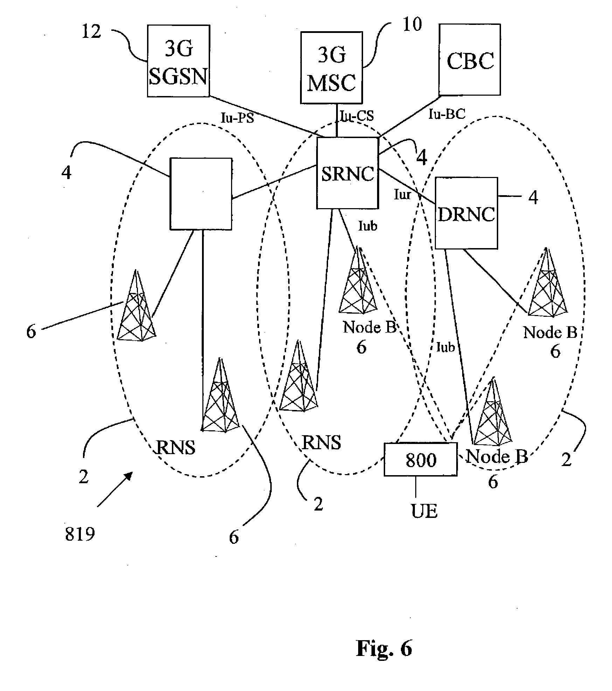

Figure 6 shows an overview of a network and a UE device. Clearly in practice there may be many UE devices operating with the network but, for the sake of simplicity, Figure 6 only shows a single UE device 800. For the purposes of illustration, Figure 6 also shows a network 819 having a few components. It will be clear to a person skilled in the art that in practice a network will include far more components than those shown.

Figure 6 shows an overview of the radio access network 819 (e.g. E-UTRAN) used in a mobile communications system. The network 819 as shown in Figure 6 comprises three Radio Network Subsystems (RNS) 2. Each RNS has a Radio Network Controller (RNC) 4. Each RNS 2 has one or more Node B 6 which are similar in function to a Base Transmitter Station of a GSM radio access network. User Equipment UE 800 may be mobile within the radio access network. Radio connections (indicated by the straight dotted lines in Figure 6) are established between the UE and one or more of the Node Bs in the network 819.

The radio network controller controls the use and reliability of the radio resources within the RNS 2. Each RNC may also connected to a 3G mobile switching centre 10 (3G MSC) and a 3G serving GPRS support node 12 (3G SGSN).

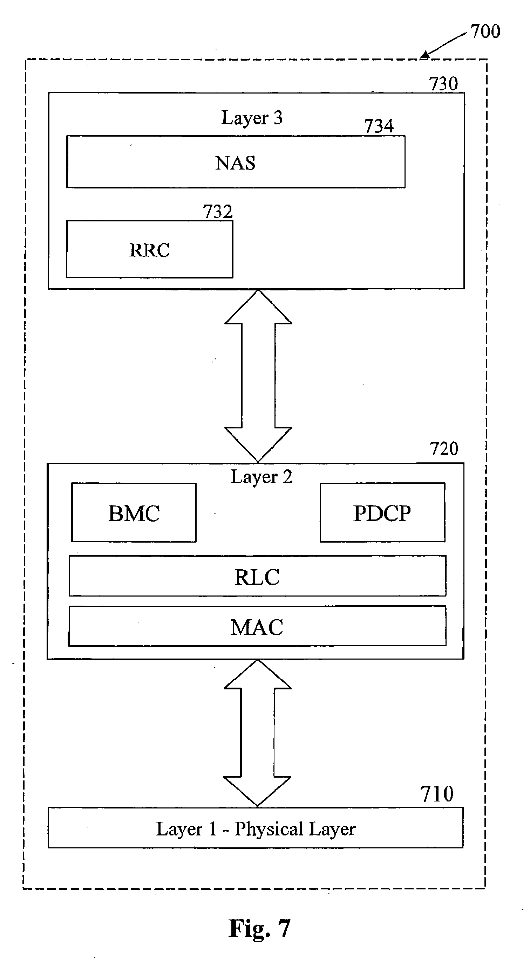

Figure 7 is a block diagram illustrating an embodiment of a protocol stack provided in a UE. A Radio Resource Controller (RRC) block 732 is a sub layer of Layer 3 730 of a protocol stack 700. The RRC 732 exists in the control plane only and provides an information transfer service to the non-access stratum NAS 734. The RRC 732 is responsible for controlling the configuration of radio interface Layer 1 710 and Layer 2 720. When the network wishes to change the UE configuration it will issue a message to the UE containing a command to invoke a specific RRC procedure. The RRC layer 732 of the UE decodes this message and initiates the appropriate RRC procedure. Generally when the procedure has been completed (either successfully or not) then the RRC sends a response message to the network (via the lower layers) informing the network of the outcome. It should be noted that there are a few scenarios where the RRC will not issue a response message to the network and, in those cases the RRC need not and does not reply.

The strategies in mobile telecommunications system user equipment as discussed above with reference to the drawings may be implemented by the RRC block 732.

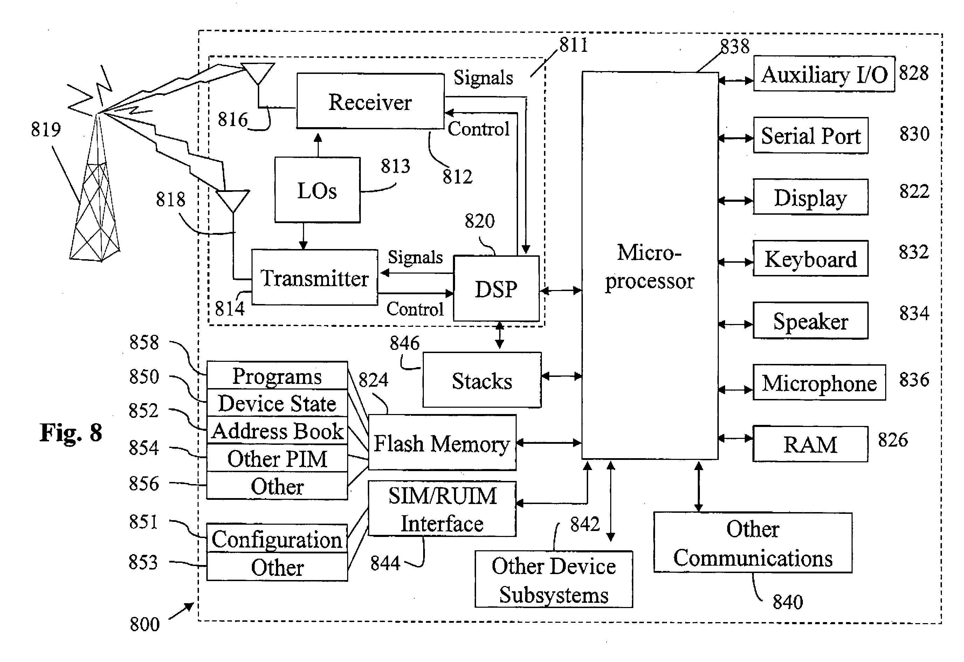

Turning now to Figure 8, Figure 8 is a block diagram illustrating a mobile device, which can act as a UE and co-operate with the apparatus and methods of Figures 1 to 7, and which is an exemplary wireless communication device. Mobile station 800 is preferably a two-way wireless communication device having at least voice and data communication capabilities. Mobile station 800 preferably has the capability to communicate with other computer systems on the Internet. Depending on the exact functionality provided, the wireless device may be referred to as a data messaging device, a two-way pager, a wireless e-mail device, a cellular telephone with data messaging capabilities, a wireless Internet appliance, or a data communication device, as examples.

Where mobile station 800 is enabled for two-way communication, it will incorporate a communication subsystem 811, including both a receiver 812 and a transmitter 814, as well as associated components such as one or more, preferably embedded or internal, antenna elements 816 and 818, local oscillators (LOs) 813, and processing means such as a processing module such as a digital signal processor (DSP) 820. As will be apparent to those skilled in the field of communications, the particular design of the communication subsystem 811 will be dependent upon the communication network in which the device is intended to operate. For example, mobile station 800 may include a communication subsystem 811 designed to operate within the Mobitex™ mobile communication system, the DataTAC™ mobile communication system, GPRS network, UMTS network, EDGE network, LTE network etc.

Network access requirements will also vary depending upon the type of network 802. For example, in the Mobitex and DataTAC networks, mobile station 800 is registered on the network using a unique identification number associated with each mobile station. In UMTS and GPRS networks, however, network access is associated with a subscriber or user of mobile station 800. A GPRS mobile station therefore requires a subscriber identity module (SIM) card in order to operate on a GPRS network. Without a valid SIM card, a GPRS mobile station will not be fully functional. Local or non-network communication functions, as well as legally required functions (if any) such as "911" emergency calling, may be available, but mobile station 800 will be unable to carry out any other functions involving communications over the network 802. The SIM interface 844 is normally similar to a card-slot into which a SIM card can be inserted and ejected like a diskette or PCMCIA card. The SIM card has memory and may hold many key configuration 851, and other information 853 such as identification, and subscriber related information.

When required network registration or activation procedures have been completed, mobile station 800 may send and receive communication signals over the network 802. Signals received by antenna 816 through communication network 802 are input to receiver 812, which may perform such common receiver functions as signal amplification, frequency down conversion, filtering, channel selection and the like, and in the example system shown in Figure 8, analog to digital (A/D) conversion. A/D conversion of a received signal allows more complex communication functions such as demodulation and decoding to be performed in the DSP 820. In a similar manner, signals to be transmitted are processed, including modulation and encoding for example, by DSP 820 and input to transmitter 814 for digital to analog conversion, frequency up conversion, filtering, amplification and transmission over the communication network 802 via antenna 818. DSP 820 not only processes communication signals, but also provides for receiver and transmitter control. For example, the gains applied to communication signals in receiver 812 and transmitter 814 may be adaptively controlled through automatic gain control algorithms implemented in DSP 820.

Mobile station 800 preferably includes processing means such as a microprocessor 838 which controls the overall operation of the device. Communication functions, including at least data and voice communications, are performed through communication subsystem 811. Microprocessor 838 also interacts with further device subsystems such as the display 822, flash memory 824, random access memory (RAM) 826, auxiliary input/output (I/O) subsystems 828, serial port 830, keyboard 832, speaker 834, microphone 836, a short-range communications subsystem 840 and any other device subsystems generally designated as 842.

Some of the subsystems shown in Figure 8 perform communication-related functions, whereas other subsystems may provide "resident" or on-device functions. Notably, some subsystems, such as keyboard 832 and display 822, for example, may be used for both communication-related functions, such as entering a text message for transmission over a communication network, and device-resident functions such as a calculator or task list.

Operating system software used by the microprocessor 838 is preferably stored in a persistent store such as flash memory 824, which may instead be a read-only memory (ROM) or similar storage element (not shown). Those skilled in the art will appreciate that the operating system, specific device applications, or parts thereof, may be temporarily loaded into a volatile memory such as RAM 826. Received communication signals may also be stored in RAM 826.

As shown, flash memory 824 can be segregated into different areas for both computer programs 858 and program data storage 850, 852, 854 and 856. These different storage types indicate that each program can allocate a portion of flash memory 824 for their own data storage requirements. Microprocessor 838, in addition to its operating system functions, preferably enables execution of software applications on the mobile station. A predetermined set of applications that control basic operations, including at least data and voice communication applications for example, will normally be installed on mobile station 800 during manufacturing. A preferred software application may be a personal information manager (PIM) application having the ability to organize and manage data items relating to the user of the mobile station such as, but not limited to, e-mail, calendar events, voice mails, appointments, and task items. Naturally, one or more memory stores would be available on the mobile station to facilitate storage of PIM data items. Such PIM application would preferably have the ability to send and receive data items, via the wireless network 802. In a preferred embodiment, the PIM data items are seamlessly integrated, synchronized and updated, via the wireless network 802, with the mobile station user's corresponding data items stored or associated with a host computer system. Further applications may also be loaded onto the mobile station 800 through the network 802, an auxiliary I/O subsystem 828, serial port 830, short-range communications subsystem 840 or any other suitable subsystem 842, and installed by a user in the RAM 826 or preferably a non-volatile store (not shown) for execution by the microprocessor 838. Such flexibility in application installation increases the functionality of the device and may provide enhanced on-device functions, communication-related functions, or both. For example, secure communication applications may enable electronic commerce functions and other such financial transactions to be performed using the mobile station 800.

In a data communication mode, a received signal such as a text message or web page download will be processed by the communication subsystem 811 and input to the microprocessor 838, which preferably further processes the received signal for output to the display 822, or alternatively to an auxiliary I/O device 828. A user of mobile station 800 may also compose data items such as email messages for example, using the keyboard 832, which is preferably a complete alphanumeric keyboard or telephone-type keypad, in conjunction with the display 822 and possibly an auxiliary I/O device 828. Such composed items may then be transmitted over a communication network through the communication subsystem 811.

For voice communications, overall operation of mobile station 800 is similar, except that received signals would preferably be output to a speaker 834 and signals for transmission would be generated by a microphone 836. Alternative voice or audio I/O subsystems, such as a voice message recording subsystem, may also be implemented on mobile station 800. Although voice or audio signal output is preferably accomplished primarily through the speaker 834, display 822 may also be used to provide an indication of the identity of a calling party, the duration of a voice call, or other voice call related information for example.

Serial port 830 in Figure 8, would normally be implemented in a personal digital assistant (PDA)-type mobile station for which synchronization with a user's desktop computer (not shown) may be desirable, but is an optional device component. Such a port 830 would enable a user to set preferences through an external device or software application and would extend the capabilities of mobile station 800 by providing for information or software downloads to mobile station 800 other than through a wireless communication network. The alternate download path may for example be used to load an encryption key onto the device through a direct and thus reliable and trusted connection to thereby enable secure device communication.

Other communications subsystems 840, such as a short-range communications subsystem, is a further optional component which may provide for communication between mobile station 800 and different systems or devices, which need not necessarily be similar devices. For example, the subsystem 840 may include an infrared device and associated circuits and components or a Bluetooth™ communication module to provide for communication with similarly enabled systems and devices.

When mobile device 800 is used as a UE, protocol stacks 846 include processes for operating as described in mobile telecommunications system user equipment.

EXTENSIONS AND ALTERNATIVES

In the foregoing specification, the invention has been described with reference to specific embodiments thereof. The specification and drawings are, accordingly, to be regarded in an illustrative rather than a restrictive sense.

It is to be noted that the methods as described have actions being carried out in a particular order. However, it would be clear to a person skilled in the art that the order of any actions performed, where the context permits, can be varied and thus the ordering as described herein is not intended to be limiting.

It is also to be noted that where a method has been described it is also intended that protection is also sought for a device arranged to carry out the method and where features have been claimed independently of each other these may be used together with other claimed features.

Furthermore it will be noted that the apparatus described herein may comprise a single component such as a UE or UTRAN or other user equipment or access network components, a combination of multiple such components for example in communication with one another or a subnetwork or full network of such components.

Embodiments have been described herein in relation to 3GPP specifications. However the method and apparatus described are not intended to be limited to the specifications or the versions thereof referred to herein but may be applicable to future versions or other specifications.

A portion of the disclosure of this patent document contains material which is subject to copyright protection. The copyright owner has no objection to the facsimile reproduction by anyone of the patent document or patent disclosure, as it appears in the Patent and Trademark Office patent file or records, but otherwise reserves all copyright rights whatsoever.

**Claims**

1.   A method in a user equipment, the method comprising, at the user equipment:

   receiving (104) a message from a cell in a wireless network;
   when reading the message is unsuccessful, determining (110) a signal quality metric for a signal received from the cell; and
   when reading of the message is unsuccessful and when the signal quality metric meets a satisfactory criterion, initiating a procedure (114) associated with cells for which reading of the message is unsuccessful, wherein the procedure associated with cells for which reading of the message is unsuccessful comprises considering the cell as a barred cell.

2.  A method according to claim 1 wherein the cell is considered as a barred cell for a time period.

3.  A method according to claim 2 wherein the time period is a function of the signal quality metric

4.  The method according to claim 1 wherein when reading of the message is unsuccessful and when the signal quality metric is below the criterion, carry out an operation selected from the following:

    ignore the signal from the designated cell;
    initiate a procedure associated with cells for which reading of the message is successful.

5.  The method according to any preceding claim wherein the signal quality metric is determined after a plurality of unsuccessful attempts to read the message from the cell.

6.  The method according to any preceding claim wherein the signal quality metric is determined by generating a weighted function of at least one quality indicator.

7.  The method according to any preceding claim wherein the signal quality metric is based on quality indicators of the signal received from the cell, the quality indicators comprising at least one of: Signal-to-Noise Ratio (SNR) of the received channel, Signal-to-Interference Ratio (SIR), Block Error Rate (BER), Reference Signal Received Power (RSRP), Reference Signal Received Quality (RSRQ), carrier-to-interference-plus-noise ratios (C/I+N), any quality indicators from demodulation, channel decoder blocks, modulation scheme, sequence properties, interference level, channel coding properties.

8.  The method of any preceding claim wherein the signal quality metric is based on a confidence factor relating to the probability of the cell being within range of the user equipment.

9.  The method according to claim 8 wherein the confidence factor is determined based on a comparison between a current information associated with the user equipment and a finger printed location of the cell; and/or a comparison between a current positioning information of the user equipment and a previous positioning information of the cell.

10. The method according to any preceding claim further comprising receiving information defining parameters to be used to determine the signal quality metric.

11. The method according to any preceding claim further comprising maintaining a count of the number of times reading of the message is unsuccessful in a signal from the cell, and when the count meets a predetermined criterion initiating for the cell a procedure associated with cells for which reading of the message is unsuccessful.

12. The method according to any preceding claim further comprising maintaining a count of the number of times a procedure associated with cells for which reading of the message is unsuccessful is initiated for the cell, and when the count meets a predetermined criterion initiating for the cell a procedure associated with cells for which reading of the message is unsuccessful.

13. A wireless telecommunications device comprising:

    a processor; and
    a memory having stored therein one or more routines executable by the processor, the one or more routines being adapted to operate according to the method of any of claims 1 to 12.

14. A computer-readable medium having computer-executable instructions adapted to cause a device to perform the method of any of claims 1 to 12.

**Patentansprüche**

1. Verfahren in einem Benutzerendgerät, wobei das Verfahren Folgendes aufweist, benutzerendgerätseitiges:

   Empfangen (104) einer Nachricht von einer Zelle in einem Drahtlosnetz,
   Bestimmen (110) einer Signalqualitätsmetrik für ein von der Zelle empfangenes Signal, wenn ein Lesen der Nachricht erfolglos ist, und
   Einleiten eines Vorgangs (114), der mit Zellen verknüpft ist, bei denen das Lesen der Nachricht erfolglos ist, wenn das Lesen der Nachricht erfolglos ist und wenn die Signalqualitätsmetrik ein ausreichendes Kriterium erfüllt,
   wobei der Vorgang, der mit Zellen verknüpft ist, bei denen das Lesen der Nachricht erfolglos ist, ein Betrachten der Zelle als eine gesperrte Zelle aufweist.

2. Verfahren nach Anspruch 1, wobei die Zelle für eine Zeitdauer als eine gesperrte Zelle betrachtet wird.

3. Verfahren nach Anspruch 2, wobei die Zeitdauer von der Signalqualitätsmetrik abhängig ist.

4. Verfahren nach Anspruch 1, wobei, wenn das Lesen der Nachricht erfolglos ist und wenn die Signalqualitätsmetrik unter dem Kriterium ist, eine aus Folgenden ausgewählte Handlung ausgeführt wird:

   das Signal von der bezeichneten Zelle ignorieren,
   einen Vorgang einleiten, der mit Zellen verknüpft ist, bei denen das Lesen der Nachricht erfolgreich ist.

5. Verfahren nach einem der vorhergehenden Ansprüche, wobei die Signalqualitätsmetrik nach einer Vielzahl an erfolglosen Versuchen bestimmt wird, die Nachricht von der Zelle zu lesen.

6. Verfahren nach einem der vorhergehenden Ansprüche, wobei die Signalqualitätsmetrik durch Erzeugen einer gewichteten Funktion mindestens eines Qualitätsindikators bestimmt wird.

7. Verfahren nach einem der vorhergehenden Ansprüche, wobei die Signalqualitätsmetrik auf Qualitätsindikatoren des von der Zelle empfangenen Signals basiert, wobei die Qualitätsindikatoren mindestens eines aus Folgendem aufweisen:

   Signal-Rausch-Verhältnis (SNR) des empfangenen Kanals, Signal-Interferenz-Verhältnis (SIR), Blockfehlerrate (BER), Referenzsignalleistungsaufnahme (RSRP), Referenzsignalempfangsqualität (RSRQ), Träger-zu-Interferenz-plus-Rausch-Verhältnis (C/I+N), beliebigen Qualitätsindikatoren von Demodulation, Kanaldecodierblökken, Modulationschema, Sequenzeigenschaften, Interferenzstufe, Kanalcodiereigenschaften.

8. Verfahren nach einem der vorhergehenden Ansprüche, wobei die Signalqualitätsmetrik auf einem Vertrauensfaktor basiert, der sich auf die Wahrscheinlichkeit bezieht, dass sich die Zelle in Reichweite des Benutzerendgerätes befindet.

9. Verfahren nach Anspruch 8, wobei der Vertrauensfaktor aufgrund eines Vergleichs zwischen einer aktuellen Information, die mit dem Benutzerendgerät verknüpft ist, und einem Fingerabdrucksort der Zelle und/oder eines Vergleichs zwischen einer aktuellen Positionsinformation des Benutzerendgerätes und einer vorherigen Positionsinformation der Zelle bestimmt wird.

10. Verfahren nach einem der vorhergehenden Ansprüche ferner mit Empfangen von Information, die Parameter festlegt, die zu verwenden sind, um die Signalqualitätsmetrik zu bestimmen.

11. Verfahren nach einem der vorhergehenden Ansprüche ferner mit Unterhalten eines Zählers für die Anzahl, dass das Lesen der Nachricht in einem Signal von der Zelle erfolglos ist, und, wenn der Zähler ein vorbestimmtes Kriterium erfüllt, Einleiten eines Vorgangs für die Zelle, der mit Zellen verknüpft ist, bei denen das Lesen der Nachricht erfolglos ist.

12. Verfahren nach einem der vorhergehenden Ansprüche, ferner mit Unterhalten eines Zählers für die Anzahl, dass ein Vorgang, der mit Zellen verknüpft ist, bei denen das Lesen der Nachricht erfolglos ist, für die Zelle eingeleitet wird, und wenn der Zähler ein vorbestimmtes Kriterium erfüllt, Einleiten eines Vorgangs für die Zelle, der mit Zellen verknüpft ist, bei denen das Lesen der Nachricht erfolglos ist.

13. Drahtlostelekommunikationsvorrichtung mit:

   einem Prozessor und
   einem Speicher, der darin eine oder mehrere Routinen gespeichert hat, die von dem Prozessor ausführbar sind, wobei die eine oder mehreren Routinen dazu ausgelegt sind, nach dem Verfahren nach einem der Ansprüche 1 bis 12 zu arbeiten.

14. Computerlesbares Medium mit von einem Computer ausführbaren Anweisungen, die dazu ausgelegt sind, zu veranlassen, dass eine Vorrichtung das Verfahren nach einem der Ansprüche 1 bis 12 durchführt.

**Revendications**

1. Procédé dans un équipement d'utilisateur, le procédé comprenant, au niveau de l'équipement d'utilisateur :

   la réception (104) d'un message en provenance d'une cellule dans un réseau sans fil ;
   lorsque la lecture du message n'a pas réussi, la détermination (110) d'une métrique de qualité de signal pour un signal reçu en provenance de la cellule ; et
   lorsque la lecture du message n'a pas réussi et lorsque la métrique de qualité de signal répond à un critère satisfaisant, l'initiation d'une procédure (114) associée à des cellules pour lesquelles la lecture du message n'a pas réussi,
   dans lequel la procédure associée à des cellules pour lesquelles la lecture du message n'a pas réussi comprend la considération de la cellule comme une cellule interdite.

2. Procédé selon la revendication 1, dans lequel la cellule est considérée comme une cellule interdite pendant une période de temps.

3. Procédé selon la revendication 2, dans lequel la période de temps est fonction de la métrique de qualité de signal.

4. Procédé selon la revendication 1, dans lequel lorsque la lecture du message n'a pas réussi et lorsque la métrique de qualité de signal est inférieure au critère, effectuer une opération sélectionnée parmi les suivantes :

   ignorer le signal provenant de la cellule désignée ;
   initier une procédure associée à des cellules pour lesquelles la lecture du message a réussi.

5. Procédé selon l'une quelconque des revendications précédentes, dans lequel la métrique de qualité de signal est déterminée après une pluralité de tentatives infructueuses pour lire le message en provenance de la cellule.

6. Procédé selon l'une quelconque des revendications précédentes, dans lequel la métrique de qualité de signal est déterminée par la génération d'une fonction pondérée d'au moins un indicateur de qualité.

7. Procédé selon l'une quelconque des revendications précédentes, dans lequel la métrique de qualité de signal est basée sur des indicateurs de qualité du signal reçu en provenance de la cellule, les indicateurs de qualité comprenant au moins un parmi : un rapport signal/bruit (SNR) du canal reçu, un rapport signal/brouillage (SIR), un taux d'erreurs sur les blocs (BER), une puissance reçue de signal de référence (RSRP), une qualité reçue de signal de référence (RSRQ), des rapports porteuse/brouillage plus bruit (C/I+N), tous indicateurs de qualité à partir de la démodulation, des blocs de décodeur de canal, un schéma de modulation, des propriétés de séquence, un niveau de brouillage, des propriétés de codage de canal.

8. Procédé selon l'une quelconque des revendications précédentes, dans lequel la métrique de qualité de signal est basée sur un facteur de confiance relatif à la probabilité de la cellule étant à portée de l'équipement d'utilisateur.

9. Procédé selon la revendication 8, dans lequel le facteur de confiance est déterminé sur la base d'une comparaison entre une information actuelle associée à l'équipement d'utilisateur et une localisation ayant fait l'objet d'une analyse d'empreintes radar de la cellule ; et/ou d'une comparaison entre une information de positionnement actuelle de l'équipement d'utilisateur et une information de positionnement précédente de la cellule.

**10.** Procédé selon l'une quelconque des revendications précédentes, comprenant en outre la réception d'informations définissant des paramètres à utiliser pour déterminer la métrique de qualité de signal.

**11.** Procédé selon l'une quelconque des revendications précédentes, comprenant en outre le maintien d'un compte du nombre de fois que la lecture du message n'a pas réussi dans un signal provenant de la cellule, et lorsque le compteur répond à un critère prédéterminé, l'initiation pour la cellule d'une procédure associée à des cellules pour lesquelles la lecture du message n'a pas réussi.

**12.** Procédé selon l'une quelconque des revendications précédentes, comprenant en outre le maintien d'un compte du nombre de fois qu'une procédure associée à des cellules pour lesquelles la lecture du message n'a pas réussi est initiée pour la cellule, et lorsque le compte répond à un critère prédéterminé, l'initiation pour la cellule d'une procédure associée à des cellules pour lesquelles la lecture du message n'a pas réussi.

**13.** Dispositif de télécommunications sans fil comprenant :

un processeur ; et
une mémoire dans laquelle sont stockées une ou plusieurs routines exécutables par le processeur, les une ou plusieurs routines étant adaptées pour fonctionner selon le procédé de l'une quelconque des revendications 1 à 12.

**14.** Support lisible par ordinateur comportant des instructions exécutables par ordinateur adaptées pour amener un dispositif à effectuer le procédé de l'une quelconque des revendications 1 à 12.

100 — Receive signal

104 — Attempt to read data

106 — Successful? — Y — Process messages — 108

N

110 — Determine signal quality metric

112 — Signal quality metric meets criterion? — N — Ignore cell or initiate procedure associated with network cells for which reading of data has been successful

116

Y

114 — Initiate procedure associated with network cells for which reading of data unsuccessful

Fig. 1

200 — Receive signal

204 — Attempt to read data

206 — Successful? ——Y——→ Process messages — 208

N

210 — Evaluate confidence metric relating to presence of cell

216

212 — Confidence factor satisfactory? ——N——→ Ignore cell or initiate procedure associated with network cells for which reading of data has been successful

Y

214 — Initiate procedure associated with network cells for which reading of data has been unsuccessful

Fig. 2

300 — Receive signal

304 — Attempt to read data

306 — Successful? —Y→ Process messages — 308

N ↓

310 — Determine signal quality metric including confidence factor

314

312 — Signal quality metric satisfactory? —N→ Ignore cell or initiate procedure associated with network cells for which reading of data has been successful

Y ↓

320 — Initiate procedure associated with network cells for which reading of data has been unsuccessful

Fig. 3

404 — Consider cell

406 — Cell considered barred?    N

Y

410 — Increment counter for cell

Counter >threshold?    N

412

Y

414 — Ignore cell or initiate procedure associated with cells for which reading of data has been unsuccessful

Fig. 4

500 ── Receive signal

504 ── Attempt to read data

506 ── Successful? ──Y──> Process messages ── 508

N

507 ── Increment counter

509 ── Counter > Threshold?? ──N──>

Y

510 ── Determine signal quality metric

512 ── Signal quality metric satisfactory? ──N──> Initiate procedure associated with network cells for which reading of data has been successful

Y

514 ── Ignore cell or initiate procedure associated with cells for which reading of data has been unsuccessful

── 516

Fig. 5

EP 2 603 045 B1

**Fig. 6**

21

700

730

## Layer 3

734

### NAS

732

### RRC

720

## Layer 2

BMC

PDCP

### RLC

### MAC

710

### Layer 1 - Physical Layer

**Fig. 7**

Fig. 8

# EP 2 603 045 B1

**REFERENCES CITED IN THE DESCRIPTION**

**Patent documents cited in the description**

- WO 2010078588 A1